# EUROPÄISCHE PATENTSCHRIFT

(11) **EP 1 312 992 B1**
(45) Veröffentlichungstag und Bekanntmachung des Hinweises auf die Patenterteilung: **26.01.2005**
(21) Anmeldenummer: 02025412.4
(22) Anmeldetag: 14.11.2002
(51) Int. Cl.: G05B 19/05

(54) **Verfahren zum Tunneln eines höherwertigen Protokolls auf einem Feldbussystem**
Method for tunneling a high level protocol through a fieldbus system
Procédé de transmission tunnel d'un protocole d'ordre élevé sur un bus de terrain

(30) Priorität: 15.11.2001 DE 10156159
(43) Veröffentlichungstag der Anmeldung: 21.05.2003
(73) Patentinhaber: SIEMENS AKTIENGESELLSCHAFT, 80333 München (DE)
(72) Erfinder: Biehler, Georg, 90473 Nürnberg (DE); Dorr, Josef, 90584 Allersberg (DE); Feld, Joachim, 90451 Nürnberg (DE)

(56) Entgegenhaltungen:
- DE-C- 19 955 306
- US-A- 5 162 986
- PROFIBUS NUTZERORGANISATION: "PROFIBUS-DP EXTENSIONS TO EN 50170 (DPV1)" PROFIBUS TECHNICAL GUIDELINE, April 1998 (1998-04), Seiten 42-48, XP002231142 Karlsruhe
- PÖSCHMANN AXEL: "Profibus-DP-Erweiterungen (DPV1)" INSTITUT FÜR AUTOMATION UND KOMMUNIKATION E.V. MAGDEBURG, [Online] 28. Juli 2001 (2001-07-28), Seiten 1-9, XP002231239 Gefunden im Internet: <URL:www.ifak.fhg.de/kommunik/deutsch/DpV1 .htm> [gefunden am 2003-02-14]

## Beschreibung

Die Erfindung betrifft ein Verfahren nach dem Oberbegriff von Anspruch 1.

Zur Anbindung von prozesssteuernden Baugruppen an Dienste, die durch höherwertige Protokolle abgewickelt werden, muss das Protokoll bis zur entsprechenden Baugruppe übertragen werden. In modernen Automatisierungssystemen sind prozesssteuernde Baugruppen üblicherweise über einen Feldbus mit einem sie steuernden Master verbunden.

Feldbusse zur Anschaltung von prozesssteuernden Baugruppen sind auf den zyklischen Datenaustausch zwischen einem Master und den prozesssteuernden Baugruppen optimiert, wobei der Master immer Initiator der Datenübertragung ist. Die mit dem Bus verbundenen Geräte werden somit hierarchisch unterschieden, und es sind dementsprechend bei der Kommunikation auf dem Bus nicht alle Geräte gleichberechtigt. Die Übertragung azyklischer Daten über diesen Kanal ist üblicherweise nicht vorgesehen, da dadurch die Qualität des äquidistanten zyklischen Kanals beeinträchtigt wird.

Höherwertige Kommunikationsprotokolle machen es dagegen erforderlich, dass alle beteiligten Partner gleichberechtigt und zu beliebigen Zeitpunkten Daten senden können.

Um einen Feldbus so zu erweitern, dass die angeschlossenen Geräte als gleichberechtigte Partner miteinander kommunizieren können, wird heute üblicherweise eine zusätzliche Busschnittstelle vorgesehen. Über diese zweite Schnittstelle wird mit der prozesssteuernden Baugruppe das höherwertige Kommunikationsprotokoll abgewickelt.

Der Nachteil dieser Lösung nach dem Stand der Technik besteht darin, dass die zusätzliche Schnittstelle die Kosten sowohl in der Baugruppe als auch in der Verdrahtung beim Einsatz der Baugruppe erhöht. Bei einer solchen zusätzlichen Schnittstelle muss darüber hinaus entweder ein eigener Kommunikationsprozessor vorgesehen werden oder der Prozessor zur Bearbeitung der Feldbusanschaltung muss dieses Protokoll zusätzlich parallel zu seinen sonstigen Aufgaben abwickeln, was zu einer erhöhten Auslastung führt. Schließlich muss eine zu diesem Bussystem passende Schnittstelle auch auf dem Kommunikationspartner (z. B. PC) vorhanden sein.

Aus der DE 199 55 306 C1 ist ein Verfahren zur Übertragung von rahmenstrukturierten Nachrichten von einem übergeordneten Gerät zu einem untergeordneten Gerät bekannt, wobei zyklisch nach dem Empfang einer Abwärtsnachricht eine Aufwärtsnachricht übermittelt wird und in einer Ausnahmesituation von einem untergeordneten Gerät eine Alarmanfrage erzeugt wird und von dem übergeordneten Gerät Nachrichtendatensätze abgerufen werden.

Druckschrift Technical Guideline, PROFIBUS-DP Extensions to EN 50170 - Version 2.0, April 1998 offenbart ein Alarmprotokoll von DPV1-Erweiterungen zur europäischen Norm EN 50170. Dort ist vorgesehen, dass ein Slave einem Master mitteilen kann, wenn der Slave eine weitere Kommunikation mit dem Master wünscht.

Aufgabe dieser Erfindung ist es, ein Verfahren anzugeben, mit welchem eine Übertragung von rahmenstrukturierten Nachrichten zwischen untergeordneten Geräten vereinfacht wird.

Diese Aufgabe wird erfindungsgemäß gelöst durch das Verfahren nach Anspruch 1. Eine bevorzugte Ausführungsform der Erfindung ist Gegenstand des Unteranspruchs.

Erfindungsgemäß wird ein höherwertiges Protokoll für die Kommunikation unter gleichberechtigten Kommunikationspartnern (peer-to-peer-Kommunikationsprotokoll) über einen vorhandenen Feldbus transparent übertragen ("tunneling" oder "encapsulation"). Dazu wird dieses an sich bekannte Verfahren derart modifiziert, dass dem übergeordneten Gerät in dem Bus von einem untergeordneten Gerät die Adresse eines anderen untergeordneten Gerätes in einer Nachricht mitgeteilt wird. Das übergeordnete Gerät erkennt, dass die mitgeteilte Adresse nicht seine eigene ist und analysiert daraufhin den Inhalt der Nachricht. Anschließend leitet es die Nachricht an das untergeordnete Gerät weiter, für das sie bestimmt ist.

Insbesondere leitet bei dem erfindungsgemäßen Verfahren, bei dem zwischen wenigstens einem übergeordneten Gerät und wenigstens zwei untergeordneten Geräten über einen Bus Nachrichten übertragen werden, das übergeordnete Gerät den wenigstens einen Nachrichtendatensatz an das zweite untergeordnete Gerät weiter, wenn der Inhalt eines Adressierungsfeldes von dem ersten untergeordneten Gerät der Adresse des zweiten untergeordneten Gerätes entspricht.

Bei einer bevorzugten Ausführungsform wird jedes Datenpaket zur Übertragung in ein Startsegment, wenigstens ein Mittelsegment und ein Schlusssegment mit jeweils einer vorgegebenen Größe aufgeteilt, wenn die zu übertragenden Datenpakete größer als das Nutzdatenfeld sind, wobei von dem übergeordneten Gerät jedes der Segmente einzeln geholt wird, an das zweite untergeordnete Gerät weitergeleitet wird und die Segmente des übertragenen Datenpaketes in dem zweiten untergeordneten Gerät re-assembliert werden. Besonders geeignet ist die Erfindung anwendbar, wenn der Bus ein Feldbus und insbesondere ein PROFIBUS ist.

Neben der Einsparung einer separaten Busschnittstelle am prozesssteuernden Gerät und an den beteiligten Partnern (z. B. PC) ist es ein Vorteil der Erfindung, dass die Nutzung von Feldbusdiensten und den darauf definierten Objekten unverändert bleibt, d. h., die zyklischen Feldbusdienste werden nicht durch ungeplante azyklische Kommunikation beeinträchtigt.

Weitere Merkmale und Vorteile der Erfindung ergeben sich aus der folgenden Beschreibung von Ausführungs- und Anwendungsbeispielen, bei der Bezug genommen wird auf die beigefügten Zeichnungen.
Figur 1 zeigt die Zerlegung eines Datenpakets in mehrere Segmente.
Figuren 2A und 2B zeigen eine Ausführungsform des Aufbaus eines Startsegments bzw. eines Mittel- oder Schlusssegments.
Figur 3 zeigt zur Erläuterung den Signalisierungsabschnitt (Header) mit Kennzeichnungsfeld und Adressierungsfeld nach Figuren 2A und 2B.
Figur 4 zeigt den dynamischen Ablauf einer Übertragung von Daten von einem übergeordneten an ein untergeordnetes Gerät.
Figur 5 zeigt zur Erläuterung eine Ausführungsform eines Profils einer Alarmzusatzinformation.
Figur 6 zeigt den dynamischen Ablauf einer Übertragung von Daten von einem untergeordneten an ein übergeordnetes Gerät.
Figur 7 zeigt den dynamischen Ablauf einer Übertragung von Daten von einem ersten untergeordneten an ein zweites untergeordnetes Gerät.

Über einen Feldbus kommunizieren Geräte zum Messen, Steuern und Regeln von Maschinen mit wenigstens einem Steuergerät. Im Folgenden werden die Geräte zum Messen, Steuern und Regeln "untergeordnete Geräte" genannt und Steuergeräte werden "übergeordnete Geräte" genannt. Die Übertragung von Daten über den Feldbus erfolgt hierarchisch, d. h., jedes untergeordnete Gerät reagiert auf Befehle des übergeordneten Gerätes, schickt aber nicht von sich aus Nachrichten über den Bus. Das übergeordnete Gerät fragt daher zyklisch die untergeordneten Geräte ab, indem es eine Abwärtsnachricht an jedes der untergeordneten Geräte absendet und das jeweilige untergeordnete Gerät nach Empfang der Abwärtsnachricht eine Aufwärtsnachricht an das übergeordnete Gerät absendet.

Die Nachrichten auf dem Bus sind rahmenstrukturiert, d. h., sie haben eine feste Länge und eine vorgegebene Struktur von Feldern für vorgegebene Inhalte, nämlich ein Kennzeichnungsfeld, ein Adressierungsfeld und ein Nutzdatenfeld, wobei weitere Felder je nach konkreter Ausgestaltung des Feldbusses hinzukommen können.

Erfindungsgemäß wird die hierarchisch gegliederte Kommunikation auf einem Feldbus erweitert. Dies wird im Folgenden anhand der Kommunikation zwischen zwei untergeordneten Geräten erläutert, durch die Erfindung wird aber ebenso gut die Kommunikation von einem untergeordneten Gerät und einem übergeordneten Gerät erweitert, so dass die Bezeichnung "übergeordnet" und "untergeordnet" für den Benutzer eines Systems mit der erfindungsgemäßen Erweiterung obsolet ist und die Benutzeroberfläche der bei einem System mit gleichberechtigten Geräten entspricht.

Die Erweiterung erfolgt so, dass auch ein Datenaustausch zwischen zwei untergeordneten Geräten möglich ist, indem für das Übertragen von Datenpaketen von einem ersten untergeordneten Gerät an ein zweites untergeordnetes Gerät über den Bus die Aufwärtsnachricht des ersten untergeordneten Gerätes an das zugehörige übergeordnete Gerät eine Adresse des wenigstens einen zweiten untergeordneten Gerätes enthält. Dies kann die Adresse eines zweiten untergeordneten oder mehrerer untergeordneter Geräte sein. Von dem übergeordneten Gerät wird die Adresse des zweiten untergeordneten Gerätes erfasst. Das übergeordnete Gerät erkennt, dass es sich bei der Adresse nicht um seine eigene Adresse handelt, und es erzeugt eine Abwärtsnachricht an das zweite untergeordnete Gerät, das durch die Adresse bezeichnet ist.

In der Abwärtsnachricht sind im Idealfall auch die Daten vollständig im Nutzdatenfeld enthalten, die das erste untergeordnete Gerät an das zweite untergeordnete Gerät übermitteln will.

In der Regel ist die Datenmenge jedoch größer, so dass sie nicht in einer Nachricht übermittelt werden kann. Um unabhängig von dem tatsächlichen Datenumfang zu sein, wird bei einer bevorzugten Ausführungsform der Erfindung in der Aufwärtsnachricht von dem ersten untergeordneten Gerät nur die Adresse mitgeteilt, die das Objekt identifiziert, in dem sich das zu übertragende Datenpaket befindet. Das übergeordnete Gerät ruft dann das zu übertragende Datenpaket an dieser Adresse ab und leitet es an das zweite untergeordnete Gerät weiter.

Insbesondere wenn die zu übertragenden Datenpakete größer als das Nutzdatenfeld sind, wird jedes Datenpaket zur Übertragung in ein Startsegment, wenigstens ein Mittelsegment und ein Schlusssegment mit jeweils einer vorgegebenen Größe und Struktur aufgeteilt. Von dem übergeordneten Gerät wird in diesem Fall jedes der Segmente einzeln geholt und an das zweite untergeordnete Gerät weitergeleitet. Die Segmente des übertragenen Datenpaketes werden in dem zweiten untergeordneten Gerät nach dem Empfang der Nachricht und aller Segmente re-assembliert.

Der genaue Ablauf dieser Segmentierung wird im Folgenden erläutert. Die erfindungsgemäße Übertragung von Datenpaketen über einen Standard-Feldbus unter einem höherwertigeren Kommunikationsprotokoll basiert auf den im Folgenden erläuterten Mechanismen.

Bei der Übertragung in Richtung vom übergeordneten Gerät zum untergeordneten Gerät wird in dem übergeordneten Gerät das Datenpaket in Segmente entsprechender Größe (entsprechend der Feldbusobjekte) aufgeteilt. Anschließend werden die Segmente zum untergeordneten Gerät mittels der im Feldbus schon vorhandenen Objekte übertragen. Zum Senden von Segmenten zu einem untergeordneten Gerät muss dazu die Objektidentifikation, über die die einzelnen Segmente geschickt werden, festgelegt werden.

Das untergeordnete Gerät wartet auf das Eintreffen von Objekten von dem übergeordneten Gerät. Es nimmt die einzelnen Segmente entgegen, re-assembliert sie und speichert die eingelesenen Segmente in lokalen Puffern ab.

Bei der Übertragung in Richtung von dem untergeordneten Gerät zu dem übergeordneten Gerät meldet das untergeordnete Gerät dem übergeordneten Gerät seinen Übertragungswunsch mittels eines im Feldbus standardmäßig vorhandenen Signalisierungsmechanismus. Beim Signalisieren wird dem übergeordneten Gerät mitgeteilt, in welchem Objekt das zu übertragende Paket abzuholen ist. Die einzelnen Segmente werden in dem Objekt, welches dem übergeordneten Gerät signalisiert worden ist, bereitgestellt.

Das übergeordnete Gerät wartet auf das Eintreffen eines Übertragungswunsches. Es holt die einzelnen Segmente entsprechender Größe (entsprechend der Feldbusobjekte) ab, re-assembliert sie und speichert die eingelesenen Segmente in lokalen Puffern ab.

Bei der Übertragung in Richtung von einem untergeordneten Gerät zu einem anderen untergeordneten Gerät meldet das sendende untergeordnete Gerät seinen Übertragungswunsch dem übergeordneten Gerät mittels eines im Feldbus vorhandenen Signalisierungsmechanismus. Beim Signalisieren wird dem übergeordneten Gerät mitgeteilt, in welchem Objekt das zu übertragende Paket abzuholen ist. Zusätzlich wird in der Signalisierung dem übergeordneten Gerät die Adresse des untergeordneten Gerätes, das das Datenpaket erhalten soll, mitgeteilt. Die einzelnen Segmente werden in dem Objekt, welches dem übergeordneten Gerät signalisiert worden ist, bereitgestellt.

Das übergeordnete Gerät wartet auf das Eintreffen eines Übertragungswunsches. Es wertet die Signalisierungsinformationen aus und liest die Zieladresse des untergeordneten Gerätes, das das Datenpaket erhalten soll, aus. Anschließend holt es die einzelnen Segmente und leitet sie jeweils sofort an das untergeordnete Gerät mit der Zieladresse weiter. Zum Weiterleiten von Segmenten zu einem untergeordneten Gerät muss die Objektidentifikation, über die die einzelnen Segmente geschickt werden, festgelegt werden. In einem Startsegment wird die Adresse des sendenden untergeordneten Geräts als Zusatzinformation mit übertragen.

Das empfangende untergeordnete Gerät wartet auf das Eintreffen von Objekten vom übergeordneten Gerät. Es nimmt die einzelnen Segmente entgegen, re-assembliert sie und speichert die eingelesenen Segmente in lokalen Puffern ab. Die Sendeadresse aus dem Startsegment wird ausgewertet.

Bei dem obigen Übertragungsmechanismus ist durch entsprechende Maßnahmen sicherzustellen, dass fehlende Segmente oder eine doppelte Übertragung von Segmenten erkannt wird. Nach vollständigem Empfang eines Pakets wird das Paket an eine überlagerte (Software-) Schicht übergeben, und die lokalen Puffer werden wieder freigegeben.

Als einfaches Realisierungsbeispiel wird die Tunnelung von TCP/IP-Paketen über PROFIBUS mit Hilfe der DPV1-Mechanismen "Alarme" und "Datensätze" im Folgenden erläutert.

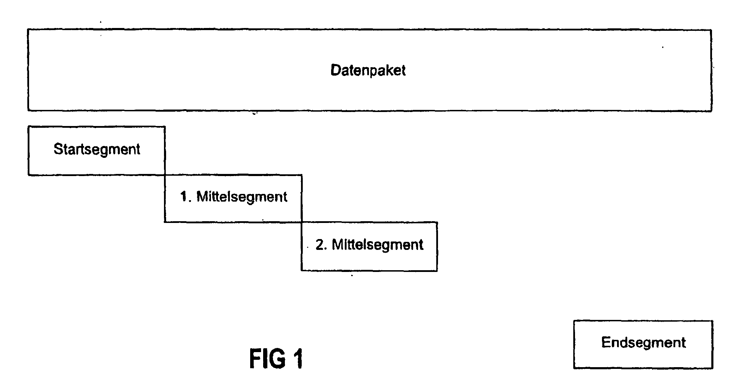

Die Segmentierung eines Datenpaketes ist in Figur 1 gezeigt. Die maximale Nettodatenlänge am PROFIBUS beträgt 240 Bytes beim Transfer von DPV1-Datensätzen. Daher müssen die zu übertragenden Datenpakete auf der Senderseite segmentiert, d. h. in (i. d. R. mehrere) Datensegmente verpackt und auf der Empfängerseite wieder re-assembliert werden. In Figur 1 ist unter einem Datenpaket ein Startsegment, ein erstes Mittelsegment, ein zweites Mittelsegment und ein Endsegment gezeigt. Die Anzahl der Mittelsegmente richtet sich nach dem Bedarf, d. h. nach dem Umfang der zu übermittelnden Daten.

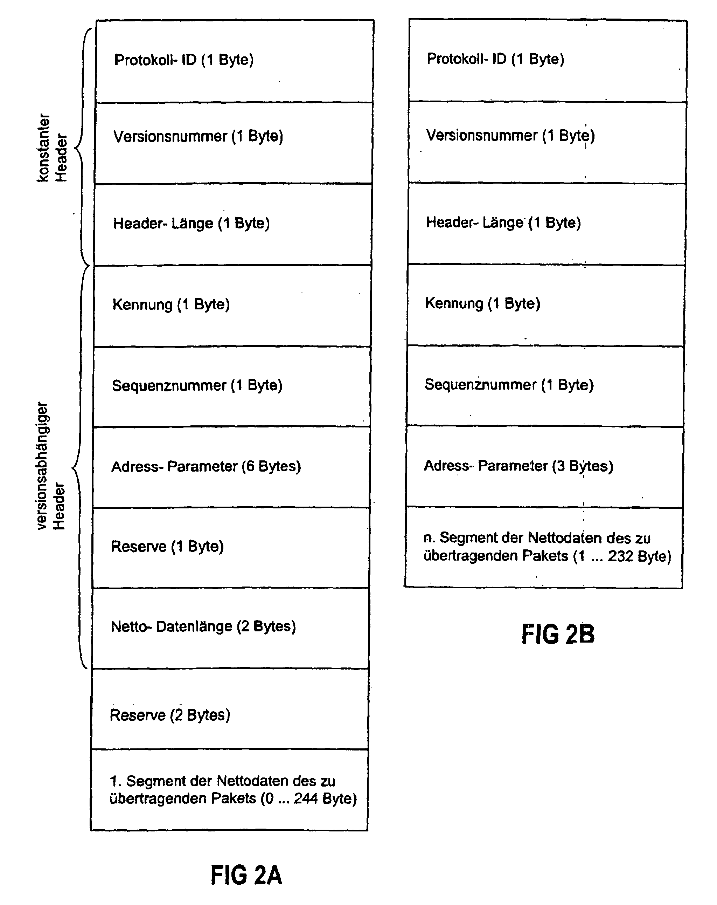

Der Aufbau der Segmente ist in Figur 2A für das Startsegment und in Figur 2B für ein Mittel- oder Endsegment gezeigt.

Bei dem Startsegment ist ein "konstanter Header" und ein "versionsabhängiger Header" vorgesehen. Der konstante Header weist in der gezeigten Ausführungsform eine Identifizierung des Protokolls auf (Protokoll-ID), die 1 Byte groß ist. Daran schließt sich eine Versionsnummer an, die ebenfalls 1 Byte groß ist. Dabei bedeutet eine "1", dass es sich um die aktuelle Versionsnummer handelt, während die Werte "2" bis "0xFF" reserviert sind. Schließlich wird in diesem konstanten Header noch die Gesamtlänge des Headers mitgeteilt, die die Summe aller Bytes von Protokoll-ID bis einschließlich Reserve (s. u.) angibt. Bei Version 1 beträgt die Länge 19 Bytes.

Der versionsabhängige Header beinhaltet als Information eine Kennung, die von dem sendenden Gerät vergeben wird und die interne Identifizierung der Nachricht beim Sender ermöglicht. Die Kennung ist eine Paketnummer, die vom Sender eindeutig vergeben wird und die die Anzahl der Pakete angibt, welche der Sender zu einem bestimmten Empfänger geschickt hat.

Daran schließt sich eine Sequenznummer an, die die Nummer des jeweiligen Segments innerhalb eines Datenpakets angibt. Die Sequenznummer 0 identifiziert eindeutig ein Startsegment bei einem Überlauf (für ein 64 kB Datenpaket werden mehr als 255 Segmente benötigt). Nach 0 wird mit der Sequenznummer 1 fortgefahren. Die Segmentnummer muss monoton steigend ohne Lücken vergeben werden.

Ein Adress-Parameter enthält die Adressierungsinformation: Im Startsegment wird die komplette Adresse übertragen, da die Empfängerangabe möglicherweise zum Weiterleiten benötigt wird, was weiter unten erläutert wird. In den Folgesegmenten wird die Absenderadresse (source address) benötigt, da nur zusammen mit dieser die Kennung eindeutig wird.

Schließlich wird in dem versionsabhängigen Header die Nettodatenlänge mitgeteilt, d. h. die Länge der Nettodaten des zu übertragenden Pakets (little endian). Dies erfolgt allerdings nur im Startsegment.

Zwischen Sequenznummer und Adress-Parameter wird ein Reservebyte eingefügt, damit Adress-Parameter und Nettodatenlänge als Wortvariablen auch auf Wortgrenzen adressiert werden können, was auf bestimmten Hardwareplattformen notwendig ist.

In Figur 2B sind die entsprechenden Anfangsfelder eines Mittel- oder Endsegments dargestellt. Wie ersichtlich, handelt es sich um Felder mit derselben Bedeutung wie einige der Felder im Startsegment. Sie werden daher hier nicht noch einmal erläutert.

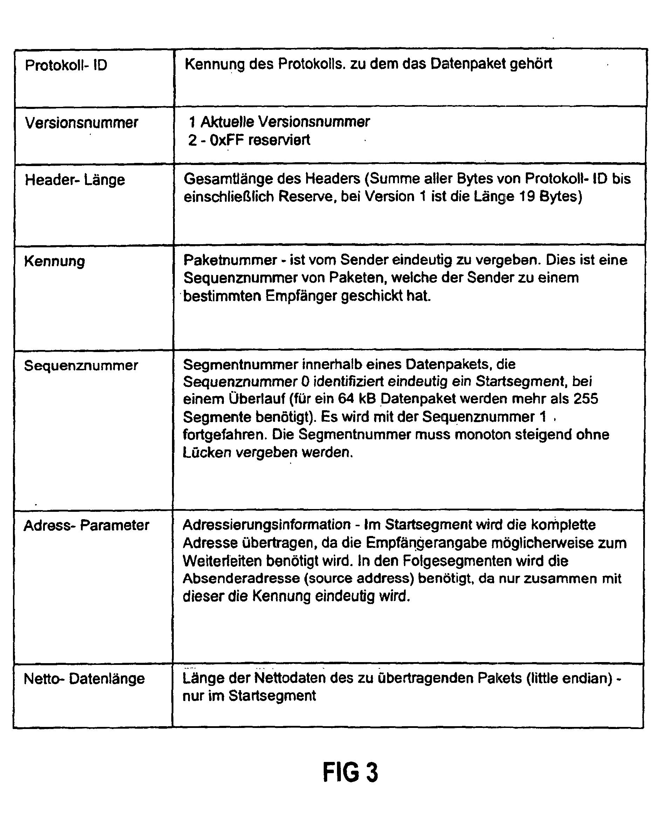

Die Bedeutung der einzelnen Felder ist in Figur 3 in tabellarischer Form zusammengefasst.

Wie sich aus der obigen Erläuterung der einzelnen Felder er gibt, wird auf der Senderseite ein Datenpaket allein durch das Feld "Kennung" bereits eindeutig identifiziert. Auf der Empfängerseite wird ein Datenpaket erst durch die Kombination der Information im Feld "Kennung" und im Feld "Absenderadresse" eindeutig identifiziert.

Allgemein kann bei der Übertragung von Daten über den PROFIBUS zu einem Zeitpunkt immer nur maximal ein Datenpaket in Sende- oder Empfangsrichtung transferiert werden. Dabei kann ein Sender mehrere Datenpakete zu jeweils unterschiedlichen Empfängern parallel verschicken, und ein Empfänger kann mehrere Datenpakete von jeweils unterschiedlichen Sendern parallel empfangen. Die Segmente werden in aufsteigender Sequenznummer vom Sender zum Empfänger übertragen, wobei der Empfänger anhand der im Startsegment übermittelten Nettodatenlänge errechnet, wie viele Segmente für das jeweilige Datenpaket empfangen werden müssen. Die Start- und Mittelsegmente sind immer vollständig gefüllt, nur das Schlußsegment enthält u. U. weniger Daten (wobei bei sehr kurzen Paketen Start- und Schlusssegment identisch sein können).

Die Empfänger überwachen die Reihenfolge der eintreffenden Segmente, fehlende Segmente führen zum Verwerfen des Pakets (z. B. nach Verbindungsabbruch). Es wird sichergestellt, dass die eingetroffenen Segmente in einem separaten Re-Assemblierungspuffer abgelegt werden. Mehrfach gesendete Segmente werden vom Empfänger toleriert, wenn Segmente mit gleicher Sequenznummer direkt nacheinander kommen, d. h. z. B. 0, 1, 2, 3, 3, 3, 4, 5, .... wird toleriert. Die Empfänger überwachen die Datenlänge des vollständig re-assemblierten Datenpakets, so dass das Datenpaket verworfen wird, wenn diese nicht mit der im Startsegment übermittelten Nettodatenlänge übereinstimmt. Es erfolgen keine Rückmeldungen vom Empfänger an den Sender, d. h. der Transport ist unquittiert. Die Empfangsressourcen werden so schnell wie möglich wieder für den Empfang neuer Segmente zur Verfügung gestellt. Durch die Anzahl von Empfangsressourcen und die Geschwindigkeit, in der diese wieder zur Verfügung stehen, wird der Durchsatz des Protokolls zu dem untergeordneten Empfängergerät bestimmt.

Beim Sender führen Fehler bei der Protokollabarbeitung zum Protokollabbruch, d. h. der Transport ist ungesichert, Sicherungsmechanismen sind auf überlagerte Schichten beschränkt. Protokollabbrüche auf der Senderseite werden dem Empfänger nicht gemeldet, der Empfänger erkennt den Protokollabbruch erst, wenn vom Sender ein neues Protokoll gestartet wird, bevor das letzte Segment vollständig übertragen wurde.

Es werden weder auf der Sender- noch auf der Empfängerseite zeitgesteuerte Überwachungsmechanismen festgelegt, die Senderseite nutzt die Überwachungsmechanismen der unterlagerten Schichten (z. B. Time-out). Wenn vom Sender ein neues Protokoll gestartet wird, bevor das letzte Segment vollständig übertragen wurde, führt dies auf der Empfängerseite zum Verwerfen des unvollständigen Datenpakets. So lange bleiben die vom Protokoll belegten Ressourcen im Empfänger belegt. (Damit kann ein Sender auch "absichtlich" einen Protokollabbruch und die Freigabe von Ressourcen im Empfänger veranlassen.)

Für das übergeordnete Gerät gilt: Falls die im Startsegment eingetragene Zieladresse nicht die eigene Adresse ist, werden die Segmente dieses Pakets sofort (ohne Re-Assemblierung) an die Zieladresse weitergeleitet. Beim Weiterleiten der Datensegmente wird die Kennung des Datenpakets durch eine vom übergeordneten Gerät generierte Kennung ersetzt. Wenn die Zieladresse nicht erreichbar ist, wird das Datenpaket verworfen.

Allgemein werden beim Ausfall des Kommunikationspartners die von dem jeweiligen Gerät belegten Ressourcen zurückgegeben.

In einer Protokollvariante für einen Übertragungskanal eines Feldbusses können über den Kanal Datenpakete vom übergeordneten Gerät zu einem zugeordneten untergeordneten Gerät gesendet werden, Datenpakete von einem untergeordneten Gerät zu seinem übergeordneten Gerät gesendet werden und Datenpakete von einem untergeordneten Gerät zu einem anderen untergeordneten Gerät desselben übergeordneten Gerätes gesendet werden. Dabei wird zwischen untergeordneten Geräten (passive Station im PROFIBUS) und übergeordneten Geräten (aktive Station im PROFIBUS) unterschieden. Jedes Gerät verfügt über einen Protokollstapel und über einen Satz an Dienstprimitiven (C1 DP). Die Kommunikation erfolgt über die Leitungsschicht (Schicht 2), die für die bitweise Übertragung mit Fehlererkennung oder Fehlerkorrektur dient. Zur Übertragung der Dienste bzw. zu ihrer Nutzung werden die Nachrichten (Befehle und Nutzdaten) durch einen Wrapper oder eine Protokolleinkapselung aufbereitet und über den Bus und das entsprechende Busprotokoll verschickt.

Bei allen diesen Vorgängen wird vorausgesetzt, dass das übergeordnete Gerät und die untergeordneten Geräte (DPV1-Geräte) Alarme, Alarmquittungen, das Lesen von Datensätzen und das Schreiben von Datensätzen (DPV1-Mechanismen) unterstützen. Als Alarmmodell wird der "TypMode" eingesetzt, die untergeordneten Geräte sind dem übergeordneten Gerät zugeordnet, d. h. sie werden von dem übergeordneten Gerät parametriert und konfiguriert, wobei sich das übergeordnete Gerät im Zustand CLEAR oder OPERATE befindet und sich die untergeordneten Geräte im Datenmodus (Data Exchange) befinden. Die untergeordneten Geräte müssen für die maximale Datensatzlänge ausgelegt sein, d. h. in der Ausführungsform der Segmente nach Figur 2A und 2B eine Länge von 240 Byte.

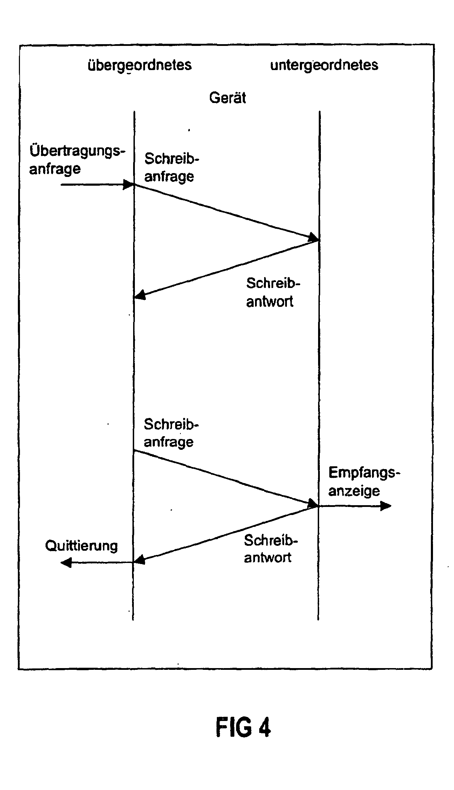

In Figur 4 wird der prinzipielle Ablauf der Übermittlung von Datenpaketen vom übergeordneten Gerät an ein zugeordnetes, untergeordnetes Gerät gezeigt. Das übergeordnete Gerät überträgt die Datensegmente sequentiell, indem es eine Übertragungsanfrage erzeugt. Dazu schickt es eine Schreibanfrage an das untergeordnete Gerät, das seinerseits dem übergeordneten Gerät eine Schreibantwort mitteilt. Dies ist in Figur 4 durch entsprechend beschriftete Pfeile dargestellt. Können die Daten nicht auf einmal übertragen werden, wird dieser Vorgang wiederholt, bis die Übermittlung aller Daten sichergestellt ist. Am Ende der Übertragung des Datenpakets erzeugt das untergeordnete Gerät eine Empfangsbestätigung für die interne Weiterverarbeitung. Das übergeordnete Gerät erzeugt seinerseits eine Quittierung zur internen Weiterverarbeitung.

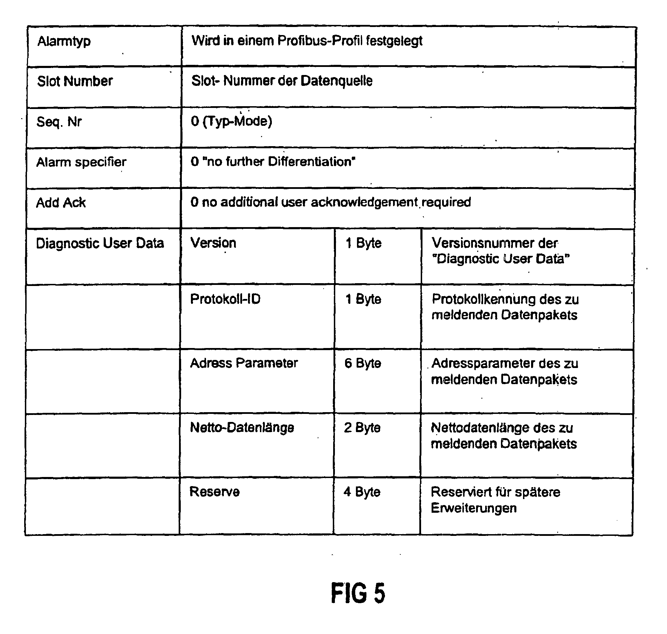

Wenn Datenpakete von einem untergeordneten Gerät an sein übergeordnetes Gerät gesendet werden sollen, so wird dazu die Möglichkeit der Alarmübertragung genutzt. Zur Übertragung schickt das untergeordnete Gerät einen Kommunikationsalarm mit Hilfe einer Dienstprimitive an sein übergeordnetes Gerät ab. Eine Ausführungsform der Alarmzusatzinformation ist in Figur 5 gezeigt.

In einem ersten Feld "Alarm_Type" wird die Art des Alarms angegeben. Dies erfolgt durch das jeweilige PROFIBUS-Protokoll. In einem folgenden Feld "Slot_Number" wird der in der Datenquelle belegte Platz bezeichnet. In einem Feld "Seq_Nr" wird ein den Typ des Alarms betreffender Parameter übertragen. Dieser Wert ist "0". Desgleichen sind die beiden folgenden Felder "Alarm_Specifier" und "Add_ack" jeweils mit einer "0" belegt. Sie spezifizieren den Alarm bzw. geben an, ob der Nutzer eine Bestätigung schicken muss. Eine "0" bedeutet jeweils, dass eine Spezifizierung nicht notwendig ist bzw. der Nutzer eine Bestätigung nicht zu schicken braucht. Schließlich werden in dem Feld "Diagnostic_User_Data" weitere Parameter angegeben, die die Version des Protokolls, seine Identifizierung, die Adresse, die Nettodatenlänge und eine Reservierung für spätere Erweiterungen betreffen. Sie sind zusammen mit ihrer Länge in der Tabelle in Figur 5 zusammengefasst.

Das übergeordnete Gerät empfängt den Kommunikationsalarm und liest anschließend die Datensegmente sequentiell mit Hilfe der Dienstprimitive als Datensatz von dem untergeordneten Gerät. Die Datensatznummer wird in einem Profil als Konstante festgelegt. Die Anzahl der Segmente und die Länge des Schlusssegments wird vom übergeordneten Gerät mit Hilfe der Paketlänge, die im Alarm als Zusatzinformation übertragen wurde, ermittelt. Nachdem das übergeordnete Gerät alle Segmente abgeholt hat oder das Protokoll abgebrochen wurde, quittiert das übergeordnete Gerät den Kommunikationsalarm mit einer weiteren Dienstprimitive.

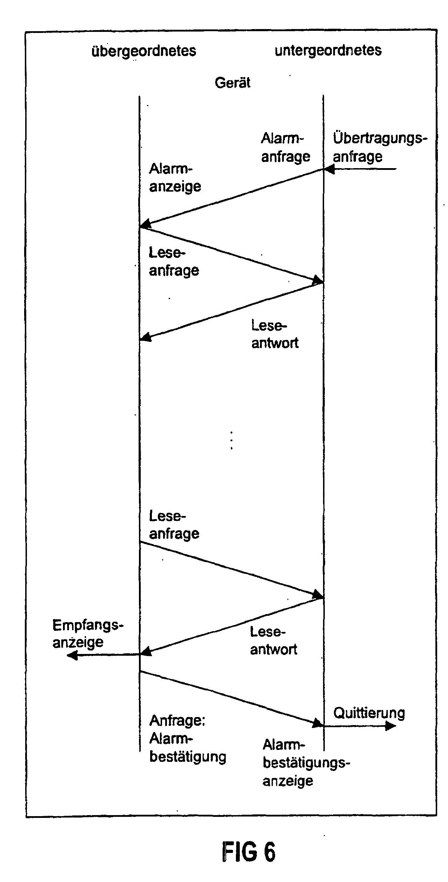

Der Ablauf ist in Figur 6 dargestellt. Das untergeordnete Gerät erzeugt eine Übertragungsanfrage, indem es eine Alarmanfrage abschickt, wie es oben mit Bezug auf Figur 5 erläutert wurde. Diese wird von dem übergeordneten Gerät als Alarmanzeige erkannt. Das übergeordnete Gerät sendet daraufhin eine Leseanfrage an das untergeordnete Gerät, das diese mit einer Leseantwort beantwortet. Diese beiden Schritte werden je nach Umfang des Datenpakets wiederholt, bis die Daten vollständig ausgetauscht worden sind. Am Ende des Datenaustauschs erzeugt das übergeordnete Gerät eine Empfangsanzeige und schickt an das untergeordnete Gerät eine Alarmbestätigung ab. Bei Empfang der Alarmbestätigungsanzeige erzeugt das untergeordnete Gerät eine Quittierungsmeldung.

Das untergeordnete Gerät überwacht das Abholen der Segmente. Wenn zum Zeitpunkt der Alarmquittung noch nicht alle Segmente abgeholt wurden, wird eine negative Quittierung (negative confirmation) generiert. Damit kann das übergeordnete Gerät alle möglichen Fehlersituationen (falsche Protokoll-ID, falsche Version ...) dem untergeordneten Gerät signalisieren. Da bei den Datensätzen beim Lesen und Schreiben verschiedene Instanzen desselben Datensatzes bezeichnet werden, können zwischen einem übergeordneten Gerät und einem bestimmten untergeordneten Gerät gleichzeitig sowohl ein Paket in Sendeals auch in Empfangsrichtung (aus Sicht des übergeordneten Gerätes) unterwegs sein.

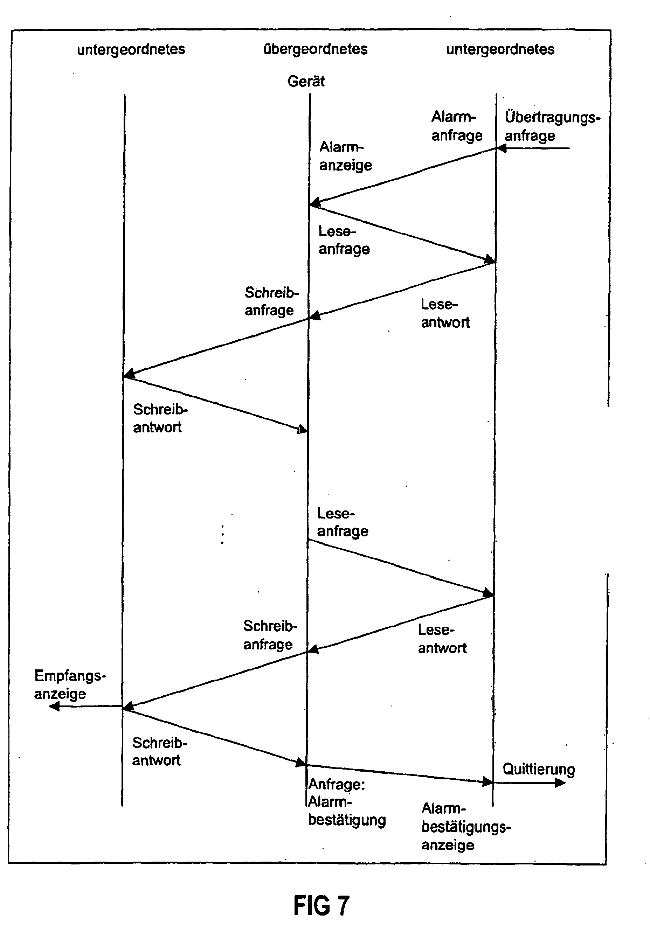

Die Übertragung von Datenpaketen von einem untergeordneten Gerät an ein anderes untergeordnetes Gerät ist in Figur 7 gezeigt.

Das untergeordnete Gerät erkennt anhand des Stationstyps der Zielstation, dass es sich bei dem Empfänger um ein untergeordnetes Gerät handelt und verschickt das Datenpaket deshalb zunächst an sein übergeordnetes Gerät als Router für die Zielstation.

Das übergeordnete Gerät erkennt seine Routerfunktion anhand der im Startsegment übermittelten Zieladresse (die nicht seine eigene ist) und transferiert daher die empfangenen Segmente sofort mit einer Dienstprimitive an das als Ziel angegebene untergeordnete Gerät weiter.

Nachdem das übergeordnete Gerät alle Segmente abgeholt hat oder das Protokoll abgebrochen wurde, quittiert das übergeordnete Gerät den Kommunikationsalarm auf dem sendenden untergeordneten Gerät mit einer Dienstprimitive.

Die Erfindung ist anwendbar bei allen Arten von Feldbussen und insbesondere bei einem System vom Typ PROFIBUS.

## Patentansprüche

1. Verfahren zum Übertragen von rahmenstrukturierten Nachrichten mit mehreren vorgegebenen Feldern zwischen wenigstens zwei untergeordneten Geräten über einen Bus, wobei
- ein übergeordnetes Gerät zyklisch eine Abwärtsnachricht an jedes der wenigstens zwei untergeordneten Geräte absendet und die wenigstens zwei untergeordneten Geräte nach Empfang der Abwärtsnachricht eine Aufwärtsnachricht an das übergeordnete Gerät absenden und
- in einer Ausnahmesituation durch ein erstes der wenigstens zwei untergeordneten Geräte eine Alarmanfrage erzeugt wird, wodurch von diesem ersten der wenigstens zwei untergeordneten Geräte ein Nachrichtendatensatz durch das übergeordnete Gerät abgerufen wird,
**dadurch gekennzeichnet, dass**
- das übergeordnete Gerät den Nachrichtendatensatz an das zweite der wenigstens zwei untergeordneten Geräte weiterleitet, wenn die Aufwärtsnachricht des ersten der wenigstens zwei untergeordneten Geräte die Adresse des zweiten untergeordneten Gerätes enthält, und
- das übergeordnete Gerät die Alarmanfrage des ersten der wenigstens zwei untergeordneten Geräte auf diesem ersten der wenigstens zwei untergeordneten Geräte quittiert.

2. Verfahren nach Anspruch 1, **dadurch gekennzeichnet, dass**, wenn zu übertragende Datenpakete größer als ein Nutzdatenfeld sind, jedes Datenpaket zur Übertragung in ein Startsegment, wenigstens ein Mittelsegment und ein Schlusssegment mit jeweils einer vorgegebenen Größe aufgeteilt wird, wobei von dem übergeordneten Gerät jedes der Segmente einzeln geholt, an das zweite untergeordnete Gerät weitergeleitet wird und die Segmente des übertragenen Datenpaketes in dem zweiten untergeordneten Gerät re-assembliert werden.

## Claims

1. Method for transmitting frame-structured messages having a plurality of predefined fields between at least two slaves by way of a bus, whereby
- a master cyclically issues a downward message to each of the at least two slaves and after receiving the downward message the at least two slaves issue an upward message to the master, and
- in an exceptional situation an alarm request is generated by a first of the at least two slaves, as a result of which a message data record is retrieved from this first of the at least two slaves by the master,
**characterised in that**
- the master forwards the message data record to the second of the at least two slaves when the upward message from the first of the at least two slaves contains the address of the second slave, and
- the master acknowledges the alarm request from the first of the at least two slaves on this first of the at least two slaves.

2. Method according to Claim 1, **characterised in that**
if data packets to be transmitted are larger than a user data field, each data packet is divided up for transmission into a start segment, at least one central segment and one final segment, each having a predefined size, whereby each of the segments is retrieved individually by the master, is forwarded to the second slave, and the segments of the transmitted data packet are reassembled in the second slave.

## Revendications

1. Procédé de transmission de messages structurés en trames avec plusieurs champs prédéterminés entre au moins deux appareils subordonnés par l'intermédiaire d'un bus,
- dans lequel un appareil de rang supérieur envoie de façon cyclique un message en direction descendante à chacun des deux ou plus appareils subordonnés et, après la réception du message en direction descendante, les deux ou plus appareils subordonnés envoient un message en direction montante à l'appareil de rang supérieur, et
- dans lequel, dans une situation exceptionnelle, une demande d'alarme est produite par un premier appareil parmi les deux ou plus appareils subordonnés, de sorte qu'un bloc de données de message est demandé par l'appareil de rang supérieur à ce premier appareil parmi les deux ou plus appareils subordonnés,
**caractérisé par le fait que**
- l'appareil de rang supérieur retransmet le bloc de données de message au deuxième appareil parmi les deux ou plus appareils subordonnés lorsque le message en direction montante du premier appareil parmi les deux ou plus appareils subordonnés contient l'adresse du deuxième appareil subordonné, et
- l'appareil de rang supérieur accuse réception de la demande d'alarme du premier appareil parmi les deux ou plus appareils subordonnés à ce premier appareil parmi les deux ou plus appareils subordonnés.

2. Procédé selon la revendication 1, **caractérisé par le fait que**, lorsque des paquets de données à transmettre sont plus grands qu'un champ de données utiles, chaque paquet de données est divisé pour la transmission en un segment de début, au moins un segment central et un segment de fin ayant chacun une dimension prédéterminée, l'appareil de rang supérieur allant chercher chacun des segments individuellement et les retransmettant au deuxième appareil subordonné et les segments du paquet de données transmis étant ré-assemblés dans le deuxième appareil subordonné.
